# EUROPEAN PATENT SPECIFICATION

(11) **EP 1 958 339 B1**
(45) Date of publication and mention of the grant of the patent: **22.09.2010**
(21) Application number: 06825835.9
(22) Date of filing: 12.10.2006
(51) Int. Cl.: H04B 1/18, H04B 1/16, H04H 20/00

(54) **DYNAMIC CURRENT SHARING IN KA/KU LNB DESIGN**
DYNAMISCHES STROM-SHARING IN EINEM KA/KU-LNB-ENTWURF
PARTAGE DYNAMIQUE DE COURANT DANS LES AMPLIFICATEURS LNB DES BANDES KA/KU

(30) Priority: 12.10.2005 US 726149 P
(43) Date of publication of application: 20.08.2008
(73) Proprietor: The DIRECTV Group, Inc., El Segundo, CA 90245 (US)
(72) Inventor: HO, Kesse, Westminster, CA 92683 (US)
(74) Representative: Jackson, Richard Eric
(86) International application number: PCT/US2006/039900
(87) International publication number: WO 2007/047377

(56) References cited:
- US-A1- 2003 129 960
- US-A1- 2004 192 190
- US-B1- 6 728 513

## Description

### BACKGROUND OF THE INVENTION

### 1. Field of the Invention.

The present invention relates generally to a satellite receiver system, and in particular, to an alignment method for multi-band consumer receiver antennas.

### 2. Description of the Related Art.

Satellite broadcasting of communications signals has become commonplace. Satellite distribution of commercial signals for use in television programming currently utilizes multiple feedhoms on a single Outdoor Unit (ODU) which supply signals to up to eight IRDs on separate cables from a multiswitch.

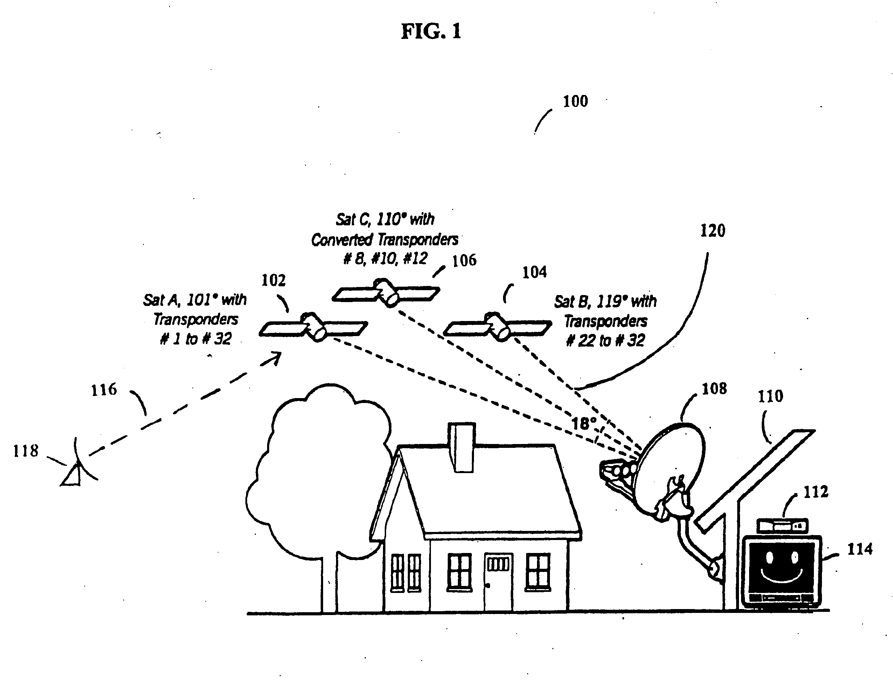

FIG. 1 illustrates a typical satellite television installation of the related art.

System 100 uses signals sent from Satellite A (SatA) 102, Satellite B (SatB) 104, and Satellite C (SatC) 106 (with transponders 28, 30, and 32 converted to transponders 8, 10, and 12, respectively), that are directly broadcast to an Outdoor Unit (ODU) 108 that is typically attached to the outside of a house 110. ODU 108 receives these signals and sends the received signals to IRD 112, which decodes the signals and separates the signals into viewer channels, which are then passed to television 114 for viewing by a user. There can be more than one satellite transmitting from each orbital location.

Satellite uplink signals 116 are transmitted by one or more uplink facilities 118 to the satellites 102-106 that are typically in geosynchronous orbit. Satellites 102-106 amplify and rebroadcast the uplink signals 116, through transponders located on the satellite, as downlink signals 120. Depending on the satellite 102-106 antenna pattern, the downlink signals 120 are directed towards geographic areas for reception by the ODU 108.

Each satellite 102-106 broadcasts downlink signals 120 in typically thirty-two (32) different sets of frequencies, often referred to as transponders, which are licensed to various users for broadcasting of programming, which can be audio, video, or data signals, or any combination. These signals have typically been located in the Ku-band Fixed Satellite Service (FSS) and Broadcast Satellite Service (BSS) bands of frequencies in the 10-13 GHz range. Future satellites will likely also broadcast in a potion of the Ka-band with frequencies of 18-21 GHz

Typically, the IRD 112 powers the ODU 108 through the cables between IRT) 112 and ODU 108. However, with additional satellites being positioned for delivery of additional downlink signals 120, IRD 112 may have difficulty providing power to ODU 108 in a consistent and proper format. If the power is not delivered properly, the signals from the additional satellites will not be properly received, rendering these signals useless for data and video transmission.

US-B1-6728513 discloses a signal processing circuit of an LNB (Low Noise Block down converter) wherein a power supply circuit is driven by DC voltage applied from four tuners via four signal input/output terminals to generate supply voltage for the LNB and equally distribute consumption current of the LNB among the four signal input/output terminals. Even if the level of the DC voltage from the four tuners is changed, currents of the same value flow through the four signal input/output terminals, Therefore, there is less noise compared with the conventional circuit having a signal input/output terminal allowing current to flow that varies.

US 2004/192190 A1 discloses a power supply circuit of a low noise block converter (LNB) which includes a plurality of output voltage regulators. A first output voltage regulator, a local oscillator circuit, a second output voltage regulator, and an LNA are connected in series in a direction in which power supply current flows. Therefore, a voltage adjustment width of the output voltage regulator can be reduced and a power loss can be reduced. A value of current flowing in the power supply circuit can also be decreased. Accordingly, an LNB with a reduced power consumption can he realized.

It can be scen, then, that there is a need in the art for a system that can property power up the ODU.

### SUMMARY OF THE INVENTION

To minimize the limitations in the prior art, and to minimize other limitations that will become apparent upon reading and understanding the present specification, the present invention discloses a method, apparatus and system providing power to Low Noise Block Amplifiers (LNBs) in a satellite signal receiving system wherein a plurality of receivers each provide power to each of the LNBs. A system in accordance with the present invention comprises a plurality of first stages of power regulation, coupled to each receiver in the plurality of receivers in a respective fashion, wherein the first stages of power regulation each comprises a switching power regulator which switches on and off to provide balanced power to the LNBs from each receiver in the plurality of receivers, and a second stage of power regulation, commonly coupled to the plurality of receivers between the first stages of power regulation and the LNBs, wherein the second stage of power regulation comprises a linear regulator.

Other features and advantages are inherent in the system and method claimed and disclosed or will become apparent to those skilled in the art from the following detailed description and its accompanying drawings.

### BRIEF DESCRIPTION OF THE DRAWINGS

Referring now to the drawings in which like reference numbers represent corresponding parts throughout:
FIG. 1 illustrates a typical satellite television installation of the related art;
FIG. 2 illustrates a typical ODU of the present invention;
FIGS. 3 and 4 illustrate current sharing diagrams of the present invention; and
FIG. 5 illustrates a schematic diagram for an embodiment of the schema shown in FIG. 4.

### DETAILED DESCRIPTION OF THE PREFERRED EMBODIMENTS

In the following description, reference is made to the accompanying drawings which form a part hereof, and which show, by way of illustration, several embodiments of the present invention. It is understood that other embodiments may be utilized and structural changes may be made without departing from the scope of the present invention.

### Overview

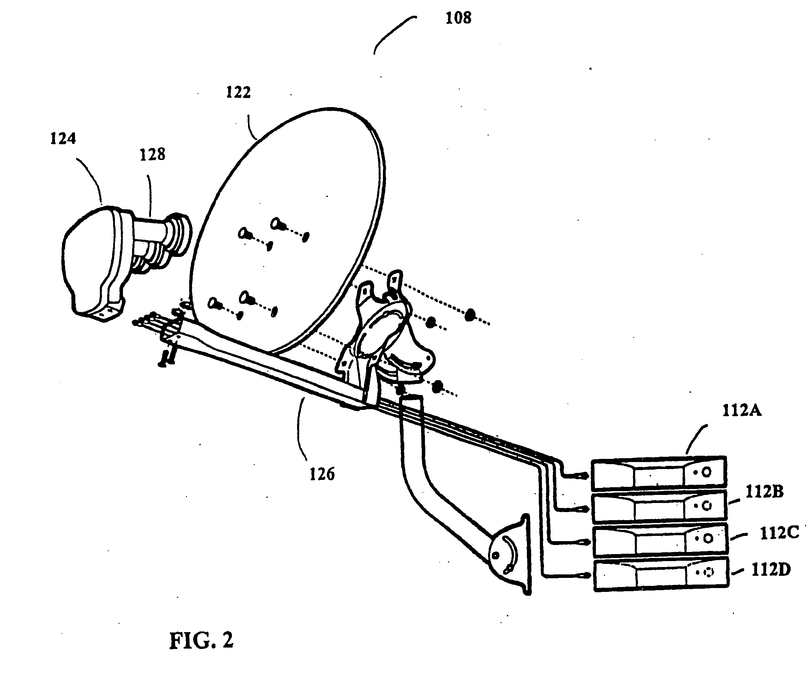

FIG. 2 illustrates a typical ODU of the related art.

ODU 108 typically uses reflector dish 122 and feedhorn assembly 124 to receive and direct downlink signals 120 onto feedhorn assembly 124. Reflector dish 122 and feedhorn assembly 124 are typically mounted on bracket 126 and attached to a structure for stable mounting. Feedhom assembly 124 typically comprises one or more Low Noise Block converters 128, which are connected via wires or coaxial cables to a multiswitch, which can be located within feedhorn assembly 124, elsewhere on the ODU 108, or within house 110. LNBs typically downconvert the FSS and/or BSS-band, Ku-band, and Ka-band downlink signals 120 into frequencies that are easily transmitted by wire or cable, which are typically in the L-band of frequencies, which typically ranges from 950 MHz to 2150 MHz. This downconversion makes it possible to distribute the signals within a home using standard coaxial cables.

The multiswitch enables system 100 to selectively switch the signals from SatA 102, SatB 104, and SatC 106, and deliver these signals via cables 124 to each of the IRDs 112A-D located within house 110. Typically, the multiswitch is a five-input, four-output (5x4) multiswitch, where two inputs to the multiswitch are from SatA 102, one input to the multiswitch is from SatB 104, and one input to the multiswitch is a combined input from SatB 104 and SatC 106. There can be other inputs for other purposes, e.g., off-air or other antenna inputs, without departing from the scope of the present invention. The multiswitch can be other sizes, such as a 6x8 multiswitch, if desired. SatB 104 typically delivers local programming to specified geographic areas, but can also deliver other programming as desired.

To maximize the available bandwidth in the Ku-band of downlink signals 120, each broadcast frequency is further divided into polarizations. Each LNB 128 can receive both orthogonal polarizations at the same time with parallel sets of electronics, so with the use of either an integrated or external multiswtich, downlink signals 120 can be selectively filtered out from travelling through the system 100 to each IRD 112A-D.

IRD 112A-D currently use a one-way communications system to control the multiswitch. Each IRD 112A-D has a dedicated cable 124 connected directly to the multiswitch, and each IRD independently places a voltage and signal combination on the dedicated cable to program the multiswitch. For example, IRD 112A may wish to view a signal that is provided by SatA 102. To receive that signal, IRD 112A sends a voltage/tone signal on the dedicated cable back to the multiswitch, and the multiswitch delivers the satA 102 signal to IRD 112A on dedicated cable 124. IRD 112B independently controls the output port that IRD 112B is coupled to, and thus may deliver a different voltage/tone signal to the multiswitch. The voltage/tone signal typically comprises a 13 Volts DC (VDC) or 18 VDC signal, with or without a 22kHz tone superimposed on the DC signal. 13VDC without the 22kHz tone would select one port, 13VDC with the 22kHz tone would select another port of the multiswitch, etc. There can also be a modulated tone, typically a 22 kHz tone, where the modulation schema can select one of any number of inputs based on the modulation scheme. For simplicity and cost savings, this control system has been used with the constraint of 4 cables coming for a single feedhorn assembly 124, which therefore only requires the 4 possible state combinations of tone/no-tone and hi/low voltage.

To reduce the cost of the ODU 108, outputs of the LNBs 128 present in the ODU 108 can be combined, or "stacked," depending on the ODU 108 design. The stacking of the LNB 128 outputs occurs after the LNB has received and downconverted the input signal. This allows for multiple polarizations, one from each satellite 102-106, to pass through each LNB 128. So one LNB 128 can, for example, receive the Left Hand Circular Polarization (LHCP) signals from SatC 102 and SatB 104, while another LNB receives the Right Hand Circular Polarization (RHCP) signals from SatB 104, which allows for fewer wires or cables between the feedhorn assembly 124 and the multiswitch.

The Ka-band of downlink signals 120 will be further divided into two bands, an upper band of frequencies called the "A" band and a lower band of frequencies called the "B" band. Once satellites are deployed within system 100 to broadcast these frequencies, the various LNBs 128 in the feedhorn assembly 124 can deliver the signals from the Ku-band, the A band Ka-band, and the B band Ka-band signals for a given polarization to the multiswitch. However, current IRD 112 and system 100 designs cannot tune across this entire resulting frequency band without the use of more than 4 cables, which limits the usefulness of this frequency combining feature.

By stacking the LNB 128 inputs as described above, each LNB 128 typically delivers 48 transponders of information to the multiswitch, but some LNBs 128 can deliver more or less in blocks of various size. The multiswitch allows each output of the multiswitch to receive every LNB 128 signal (which is an input to the multiswitch) without filtering or modifying that information, which allows for each IRD 112 to receive more data. However, as mentioned above, current IRDs 112 cannot use the information in some of the proposed frequencies used for downlink signals 120, thus rendering useless the information transmitted in those downlink signals 120.

The problem with the additional LNBs 128 that will be required for a Ka-band system 100 is that IRD 112 will have difficulty providing power to all of the LNBs 128 simultaneously. The current drawn by the LNBs 128 is significant, and, as such, the present invention provides a method and system for providing the current to the LNBs 128 in an efficient manner.

### Current Sharing Schema

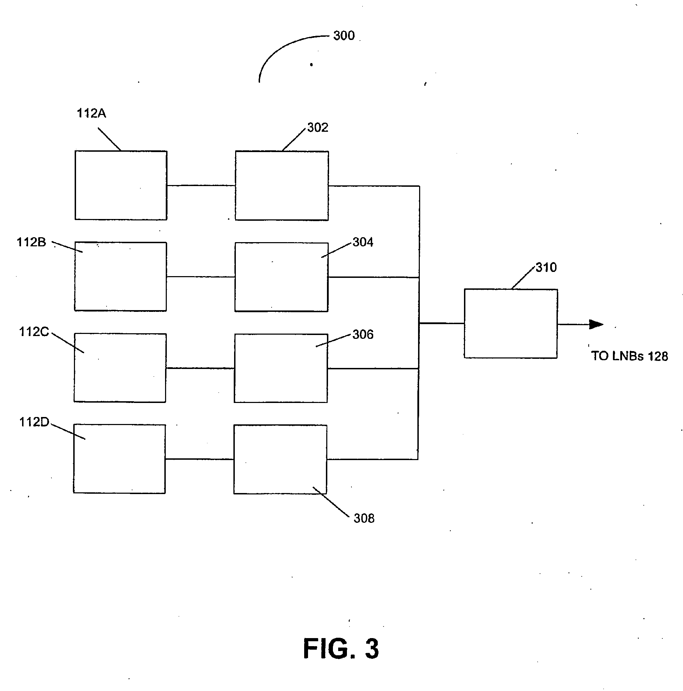

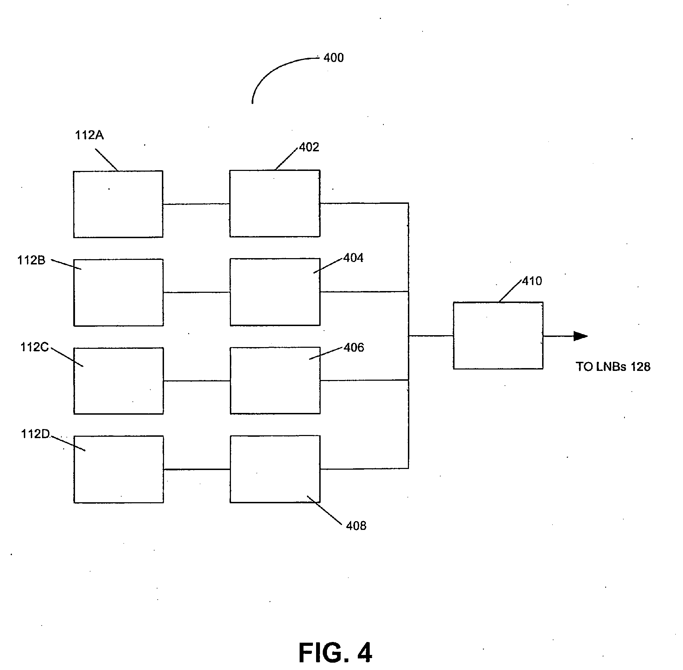

FIGS. 3 and 4 illustrate current sharing diagrams of the present invention.

As system 100 has expanded to include additional satellites at different orbital slots and different frequency bands, system 100 can no longer turn off LNBs 128 that are unused. In system 100 with additional satellites transmitting at the KA-band, three LNBs 128 must be powered at the same time for any given selection code (e.g., 13 VDC selects a Ka-band low LNB 128, a Ku-band LNB 128, and a Ka-band high LNB 128). Some selections will power four LNBs 128 at the same time.

In a typical dual LNB 128 system, whichever IRD 112 has a higher voltage present at the input to the LNB 128 provides all of the current to power LNB 128. In a typical triple LNB 128 system, linear regulators are used to provide some current sharing, however, regardless of input power, each regulator dissipates some power as heat because the LNB 128 only takes what is needed.

System 300 illustrates IRDs 112A-D coupled to DC-DC converters 302-308, which are each then coupled to DC-DC linear regulator 310. Each of the DC-DC converters 302-308 acts as a switching regulator, which switches on and off rather than require a constant current draw, therefore providing more efficient delivery of power to LNBs 128.

System 400 illustrates TRDs 112A-D coupled to DC-DC lineal-regulators 402-408, which are each then coupled to DC-DC converter 410. DC-DC converter 410 acts as a regulator, which switches on and off rather than require a constant current draw, therefore providing more efficient delivery of power to LNBs 128.

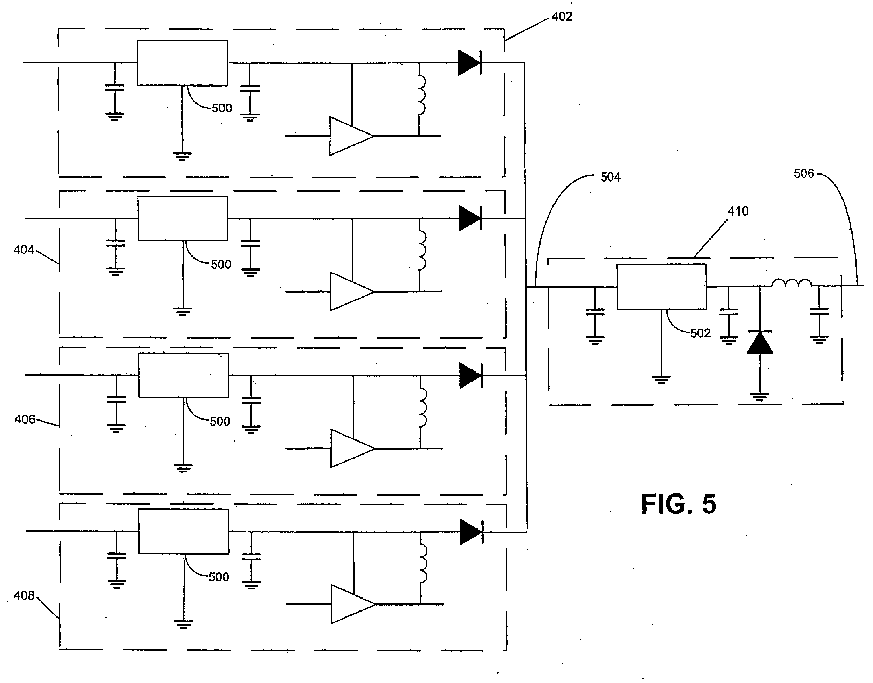

FIG. 5 illustrates a schematic diagram for an embodiment of the schema shown in FIG. 4.

Regulators 402-408, and DC-DC regulator 410 are shown, along with regulators 500 and DC-DC switching regulator 502. Regulators 400 are typically 7808 or 7809 regulators, while DC-DC regulator 502 is typically a 750 kHz regulator. The second stage of regulation provided by regulator 410 (or, as shown in FIG. 3, regulator 310), balances the current supplied by each of IRDs 112A-D, to allow for all LNBs 128 present in system 100 to be powered in a proper manner.

The interaction between regulator 410 with regulators 402-408 allows for a more dynamic sharing of the current requirements for LNBs 128, without overtaxing any one of the IRDs 112A-D in a given system 100.

Diodes shown in FIG. 5 are typically schottky diodes, but can be p-n diodes if desired.

Further, the voltage present at point 504 is typically 8.1 volts, and the voltage present at point 506 is typically 5.1 volts, but these values can vary without departing from the scope of the present invention.

### Conclusion

In summary, the present invention comprises a method, apparatus and system providing power to Low Noise Block Amplifiers (LNBs) in a satellite signal receiving system, wherein at least one receiver provides power to the LNBs. A system in accordance with the present invention comprises a first stage of power regulation, coupled to the at least one receiver in a respective fashion, wherein the first stage of power regulation comprises linear regulation, and a second stage of power regulation, coupled between the first stage of power regulation and the LNBs, wherein the second stage of power regulation comprises a switching power regulator.

Another embodiment of the present invention comprises a first stage of power regulation, coupled to the at least one receiver in a respective fashion, wherein the first stage of power regulation comprises a switching power regulator, and a second stage of power regulation, coupled between the first stage of power regulation and the LNBs, wherein the second stage of power regulation comprises a linear regulator.

The above specification, examples and data provide a complete description of the manufacture and use of the composition of the invention. Since many embodiments of the invention can be made without departing from the spirit and scope of the invention, the invention resides in the claims hereinafter appended and the equivalents thereof.

## Claims

1. A system for providing power to Low Noise Block Amplifiers (LNBs) (128) in a satellite signal receiving system (100), wherein a plurality of receivers each provide power to each of the LNBs, comprising:
a plurality of first stages of power regulation, coupled to each receiver in the plurality of receivers in a respective fashion, **characterized in that** the first stages of power regulation each comprise a switching power regulator (302-308, 402-408) which switches on and off to provide balanced power to the LNBs from each receiver in the plurality of receivers; and
a second stage of power regulation, commonly coupled to the plurality of receivers between the first stages of power regulation and the LNBs, wherein the second stage of power regulation comprises a linear regulator (310, 410).

2. The system (100) of claim 1, wherein the first stage of power regulation and the second stage of power regulation allow the plurality of receivers (112) to share power requirements of the LNBs (128).

3. The system (100) of claim 2, wherein the switching power regulator (302-308, 402-408) is a DC-DC converter.

4. The system (100) of claim 3, wherein the second stage of power regulation provides current balancing to the plurality of receivers (112).

## Patentansprüche

1. System zum Zuführen einer Leistung zu Low-Noise-Block-Verstärkern bzw. rauscharmen Verstärkern (LNBs) (128) in einem Satellitensignal-Empfangssystem (100), wobei eine Mehrzahl von Empfängern jeweils jedem der LNBs Leistung zuführt, wobei das System aufweist:
eine Mehrzahl von ersten Stufen einer Leistungsregulierung, die mit jedem Empfänger der Mehrzahl von Empfängern in einer entsprechenden Weise gekoppelt sind, **dadurch gekennzeichnet, dass** die ersten Stufen der Leistungsregulierung jeweils einen Schaltleistungsregulator (302-308, 402, 408) aufweisen, der ein- und ausschaltet, um den LNBs von jedem Empfänger der Mehrzahl der Empfänger gleichmäßig Leistung zuzuführen; und
eine zweite Stufe einer Leistungsregulierung, die mit der Mehrzahl der Empfänger zwischen den ersten Stufen einer Leistungsregulierung und den LNBs gemeinsam gekoppelt ist, wobei die zweite Stufe der Leistungsregulierung einen Linearregulator (310, 410) aufweist.

2. System (100) nach Anspruch 1, wobei die erste Stufe der Leistungsregulierung und die zweite Stufe der Leistungsregulierung der Mehrzahl der Empfänger (112) erlauben, den Leistungsbedarf der LNBs (128) anteilig zu decken.

3. System (100) nach Anspruch 2, wobei der Schaltleistungsregulator (302-308, 402-408) ein Gleichstromwandler ist.

4. System (100) nach Anspruch3, wobei die zweite Stufe der Leistungsregulierung eine gleichmäßige Zufuhr des Stroms zu der Mehrzahl der Empfänger (112) ermöglicht.

## Revendications

1. Système destiné à alimenter en puissance des Blocs d'Alimentation à Bruit Réduit (LNB) (128) dans un système de réception de signaux satellitaires (100), dans lequel chacun d'une pluralité de récepteurs alimente en puissance chacun des LNB, comprenant :
une pluralité de premiers étages de régulation de puissance, couplés à chaque récepteur dans la pluralité de récepteurs d'une façon respective, **caractérisé en ce que** les premiers étages de régulation de puissance comprennent chacun un régulateur de puissance de commutation (302-308, 402-408) qui bascule sur marche et arrêt pour fournir une puissance équilibrée aux LNB à partir de chaque récepteur dans la pluralité de récepteurs ; et
un deuxième étage de régulation de puissance, couplé de manière commune à la pluralité de récepteurs entre les premiers étages de régulation de puissance et les LNB, dans lequel le deuxième étage de régulation de puissance comprend un régulateur linéaire (310, 410).

2. Système (100) de la revendication 1, dans lequel le premier étage de régulation de puissance et le deuxième étage de régulation de puissance permettent à la pluralité de récepteurs (112) de partager des impératifs de puissance aux LNB (128).

3. Système (100) de la revendication 2, dans lequel le régulateur de puissance de commutation (302-308, 402-408) est un convertisseur continu-continu.

4. Système (100) de la revendication 3, dans lequel le deuxième étage de régulation de puissance procure un équilibrage de courant à la pluralité de récepteurs (112).
